# EUROPÄISCHE PATENTSCHRIFT

(11) **EP 1 888 321 B1**
(45) Veröffentlichungstag und Bekanntmachung des Hinweises auf die Patenterteilung: **03.12.2008**
(21) Anmeldenummer: 06754293.6
(22) Anmeldetag: 02.06.2006
(51) Int. Cl.: B29C 67/00, B29L 31/00

(54) **VERFAHREN ZUR HERSTELLUNG EINES GEGENSTANDS MIT MINDESTENS ZWEI BEWEGLICHEN BAUTEILEN**
PROCESS FOR PRODUCING AN OBJECT HAVING AT LEAST TWO MOVING PARTS
PROCEDE DE PRODUCTION D'UN OBJET COMPRENANT AU MOINS DEUX ELEMENTS MOBILES

(30) Priorität: 03.06.2005 DE 102005025664; 15.05.2006 DE 102006023369
(43) Veröffentlichungstag der Anmeldung: 20.02.2008
(73) Patentinhaber: Fraunhofer-Gesellschaft zur Förderung der angewandten Forschung e.V., 80686 München (DE)
(72) Erfinder: BECK, Julian, 73099 Adelberg (DE); BADSTÜBNER, Kathrin, 82211 Herrsching am Ammersee, GT Widdersberg (DE); ANSORGE, Frank, 81245 München (DE)
(74) Vertreter: Pfenning, Meinig & Partner GbR
(86) Internationale Anmeldenummer: PCT/EP2006/005599
(87) Internationale Veröffentlichungsnummer: WO 2006/128736

(56) Entgegenhaltungen:
- EP-A- 0 322 257
- US-A1- 2002 016 386
- US-A1- 2005 058 573
- US-B1- 6 450 393
- US-B1- 6 780 572

## Beschreibung

Die Erfindung betrifft ein Verfahren zur Herstellung eines Gegenstands mit mindestens zwei relativ zueinander beweglichen Bauteilen gemäß dem Anspruch 1.

Für die Herstellung von Prototypen oder Mustern oder anderen Bauteilen, die auch komplex ausgebildet sein können, ist die Rapid Prototyping Technologie bekannt, mittels der nach vorher in einem CAD-Programm erstellten STL(Standard Transformation Language)-Daten diese Gegenstände gefertigt werden können. Eine unter die Rapid Prototyping Technologie fallende Umsetzungsmöglichkeit ist das Multi-Jet-Modeling-Verfahren. Dieses Verfahren ist ein generatives Fertigungsverfahren und ermöglicht die Herstellung von Mustern, Prototypen und Werkstücken aus formlosem Material ohne den Einsatz von speziellen Werkzeugen.

Der Auftrag des Materials wird mit Hilfe eines Druckkopfes über eine Vielzahl von Einzeldüsen durchgeführt. Hochwertige Modelle für z.B. detailgetreue Urformen können so kosteneffektiv und binnen kürzester Zeit für Folgeprozesse, wie z.B. Vakuumverguss bereitgestellt werden.

Dabei wird das Modell auf einer Bauteilplattform aufgebaut. Grundsätzlich wird das Modell schichtweise auf der Basis der für jede Bauebene aus dem STL-Datensatz berechneten Konturdaten hergestellt. Zuerst wird zur eindeutigen Fixierung der zu fertigenden Bauschichten auf der Bauplattform eine spezielle Stützengeometrie aufgetragen. Das Baumaterial wird anschließend in der Breite des Druckkopfes aufgetragen, wobei der Druckkopf durch einen computergesteuerten Verfahrmechanismus geführt wird. Danach wird, wenn das Modell größer ist als die Druckkopfbreite die Bauplattform um eine Druckkopfbreite verschoben. Das Stützenmaterial wird hinsichtlich des schichtweisen Aufbaus so geplant, dass überhängende Strukturen des Baumaterials, die in später aufgebrachten Schichten vorgesehen sind, von den darunterliegenden Schichten des Stützenmaterials abgestützt werden. Nach dem Aufbau der gesamten Schicht wird die Bauplattform um eine Schichtdicke abgesenkt bzw. werden die Druckköpfe nachgeführt. Das Baumaterial ist thermoplastisch und wird aufgeschmolzen und durch die Düsen des Druckkopfes in Form von Tröpfchen aufgetragen, und anschließend im UV-Licht gehärtet. Die zusätzlich aufgetragene Stützenstruktur wird nach dem Drucken in einem Ofen abgeschmolzen.

Wie schon ausgeführt, wird als Baumaterial ein wachsähnlicher Thermoplast eingesetzt, beispielsweise ein Acryl-Photopolymer, welches Wachsbestandteile in einer Acrylatgrundstruktur zusammenhält. Die Wachsbestandteile haben einen Schmelzpunkt von ca. 65°C, in der Verbindung mit dem Acrylat können die Modelle jedoch einer Temperatur von bis ca. 80°C ausgesetzt werden. Das Material für die Stützengeometrie ist ebenfalls ein Wachs und wird im Wärmeofen bei ca. 70°C abgeschmolzen.

Die Vorteile des beschriebenen Verfahrens bestehen im Vergleich zu anderen Rapid-Prototyping-Systemen besonders in der hohen Auflösung der Modelle. In z-Richtung können Schichtstärken von 800 DPI (entspricht ca. 32 µm) erreicht werden, in x- und y-Richtung können Schichten mit einer Auflösung von 656 DPI gedruckt werden. Bislang wurde das Verfahren genutzt, um Bauteile zu produzieren, wobei für mehrteilige Gegenstände jedes Bauteil einzeln entsprechend dem obigen Verfahren hergestellt wurde und dann zusammengesetzt wurde. Bei einem Getriebe musste z.B. jedes Zahnrad einzeln gedruckt, abgeschmolzen und auf die Welle gesetzt werden. Da es erst zu einem späteren Zeitpunkt zusammengebaut wurde, war es auch nötig, dazu geeignete Geometrien zu verwenden. Z.B. mussten bei der Konstruktion einer Welle im CAD-Programm offene Geometrien vorgesehen werden, um anschließend Zahnräder montieren zu können.

US 6 450 393 B1 betrifft ein Verfahren zum Herstellen eines Mikromotors mit beweglichen Bauteilen. Dabei liegt der Motor als Geometriedaten für ein Rapid-Prototyping-Verfahren vor. Für unterschiedliche Bauteile werden unterschiedliche Materialien verwendet.

Aus der US 6 780 572 B1 ist ein optisches Lithographieverfahren gemäß dem Oberbegriff des Anspruchs 1 zur Herstellung von dreidimensionalen Gegenständen bekannt, bei dem mit Hilfe von dreidimensionalen CAD Daten schichtweise ein Bauteilmaterial aufgebracht und unter Verwendung einer zuvor aufgetragenen Maske gehärtet wird, wobei das ungehärtete Baumaterial Lücken zwischen dem gehärteten Baumaterial ausfüllt. Nach der Beendigung des schichtweisen Aufbaus wird das ungehärtete Baumaterial entfernt.

EP-A-0 322 257 beschreibt ein Verfahren zur Herstellung eines dreidimensionalen Modells, wobei entsprechend der vorgegebenen Geometriedaten schichtweise ein verfestigbares Material aufgebracht und selektiv verfestigt wird, das nicht verfestigte Material entfernt und durch ein entfernbares und unter anderen Bedingungen verfestigbares Stützmaterial ersetzt wird, das später entfernt wird.

Der Erfindung liegt daher die Aufgabe zugrunde, einen Gegenstand mit mehreren beweglichen Teilen entsprechend dem Rapid-Prototyping-Verfahren zu schaffen, mit dem der Gegenstand insgesamt mit geringerem Zeitaufwand und vereinfachten Geometrien hergestellt werden kann.

Diese Aufgabe wird erfindungsgemäß durch die Merkmale des Anspruchs 1 gelöst.

Dadurch, dass von dem gesamten Gegenstand mit seinen beweglichen und gegebenenfalls feststehenden Bauteilen für ein Rapid-Prototyping-Verfahren Geometrie-Daten erstellt werden, wobei zwischen den beweglichen Teilen ein vorgegebener minimaler Abstand berücksichtigt wird, und dass entsprechend der vorgegebenen Geometrie-Daten schichtweise ein erstes Material als Stützenmaterial und ein zweites Material als Bauteilematerial aufgebracht wird, wobei das Stützenmaterial Lücken einschließlich derjenigen mit dem minimalen Abstand ausfüllt und dass nach Beendigung des schichtweisen Aufbaus das Stützenmaterial entfernt wird, ist es möglich, den Gegenstand mit allen Teilen direkt zu fertigen. Somit fallen der zusätzlichen Zusammenbau und der damit verbundene Zeitaufwand weg. Des Weiteren brauchen keine Geometrien beachtet oder vorgesehen zu werden, die es zu einem späteren Zeitpunkt ermöglichen würden, den Gegenstand auseinander-oder zusammenzubauen. Gleichzeitig wird eine höhere Stabilität erreicht.

Durch die in den Unteransprüchen vorgesehenen Merkmale sind vorteilhafte Weiterbildungen und Verbesserungen möglich.

Der minimale Abstand zwischen den beweglichen Bauteilen ist abhängig von den Eigenschaften des Stützenmaterials, von der Größe der beweglichen Teile und/oder von den Möglichkeiten der Auftragung. Er wird so bestimmt, dass unter Berücksichtigung der Eigenschaften des Stützenmaterials dieses bei seiner Entfernung aus dem Bereich zwischen den Bauteilen abgeführt werden kann. Der minimale Abstand ist bei verhältnismäßig niedriger Viskosität und hoher Auflösung beim Auftragen des Stützenmaterials eine Moleküllage. Vorteilhafterweise wird abhängig von den Eigenschaften des Stützenmaterials, insbesondere bei Stützenwachs, und von der Größe der zueinander beweglichen Bauteile ein minimaler Abstand von größer als 0,1 mm vorgesehen.

Das Stützenmaterial wird aufgrund seiner zu dem Bauteilematerial unterschiedlichen physikalischen und/oder chemischen Eigenschaften getrennt.

Für gegeneinander bewegliche Strukturen, die ebenfalls mittels eines Baumaterials des Dichtebereichs von ca. 1,01 g/cm³ (bei 25°C) und des Viskositätsbereichs von 12 bis 14 mPa·s (bei 80°C) gefertigt werden, ist es ebenfalls begründet in der Auflösung notwendig, einen Abstand von mindestens 100 bis 130 µm zwischen den einzelnen Bauteilen einzuhalten, um Beweglichkeit zu garantieren. Hierbei dürfen die sich parallel gegenüberliegenden Flächen, die gegeneinander beweglich sein sollen, nicht größer als 30 mm² sein. Ist dies der Fall, ist die Viskosität des Stützenmaterials ein zusätzlich bestimmender Faktor, da dieses von den wirkenden Kapillarkräften am Abfließen gehindert wird. Deshalb ist für ein Stützenmaterial des Viskositätsbereiches von um 10 bis 12 mPa·s (bei 80°C) und des Dichtebereiches von ca. 0,91 g/cm³ (bei 25°C) ein Abstand zweier parallel gegenüberliegender Flächen von mindestens 0,3 mm notwendig.

Muss Material durch ein Loch, z.B. aus dem inneren eines Hohlraums nach außen, abfließen, so muss der Durchmesser dieser Öffnung aufgrund der Viskosität (Bereich: Viskositätsbereich von um 10 bis 12 mPa·s bei 80°C) des Stützenmaterials mindestens 1 mm betragen.

Besonders vorteilhaft ist, dass das Stützenmaterial so gewählt wird, dass es einen niedrigeren Schmelzpunkt als das Bauteilematerial aufweist, wodurch das Stützenmaterial durch Erhöhung der Temperatur über den Schmelzpunkt in einfacher Weise abgeführt werden kann. Es sind auch andere Stützenmaterialien denkbar, die durch Ätzen, Plasmabehandlungen, unterschiedlichen Löslichkeiten in Reagenzien oder Beaufschlagung mit einer Strahlung vom Baumaterial getrennt werden können. Die Bauteile- und Stützenmaterialschichten können auf unterschiedliche Weise aufgebraucht werden, z.B. durch Drucken, durch Dispensieren, durch Schablonendruck und dergleichen. Vorteilhafterweise werden die verschiedenen Schichten aus Bauteile- und Stützenmaterial durch einen Druckkopf über Düsen aufgebracht, der abhängig von den Geometrie-Daten gesteuert wird. Das Verfahren zum Aufbau des Gegenstands mittels Druckkopf erlaubt somit eine einfache Herstellung.

In einem vorteilhaften Ausführungsbeispiel werden an, in oder zwischen den Bauteilen zusätzliche geometrische Maßnahmen getroffen, wie Kanülen, Rillen oder Löcher, die ein Lösen und/oder Abfließen des Stützenmaterials erleichtern.

Beispielsweise ist es nun möglich, einen Gegenstand mit einem Bauteil, das eine einen Hohlraum einschließende Struktur, z.B. eine Kugel herzustellen, wobei in dieser Struktur, d.h. dieser Kugel ein weiteres Bauteil, z.B. eine weitere Kugel beweglich aufgenommen ist. Bei einem getrennt ablaufenden Fertigungsprozess zweier unterschiedlicher Kugeln ist es hinterher nicht mehr möglich, diese zu integrieren. Unter Zuhilfenahme des erfindungsgemäßen Verfahrens ist eine Montage überflüssig. Es ist lediglich nötig, ein oder mehrer kleinere Löcher in der äußeren Kugel vorzusehen, um damit den Abfluss des Stützenmaterials, z.B. des Stützenwachses zu ermöglichen. Auch dabei ist der Durchmesser abhängig von den Eigenschaften des Stützmaterials, bei Stützenwachs reicht für diese Löcher schon ein Durchmesser von 1 mm.

Es ist nun möglich komplexere Gegenstände, die bewegliche Teile besitzen, in einem Druckvorgang zu fertigen. Dadurch ist es darüber hinaus möglich, Bauteile herzustellen, die über das Stadium eines Anschauungsmusters hinaus auch als funktionale Prototypen eingesetzt werden können. Beispielsweise können diese Prototypen direkt in mechanischen, elektronischen oder mechatronischen Baugruppen einer Maschine verwendet werden. Dies ist bisher nur zu einem gewissen möglich, da es die Eigenschaften des aus Wachs gefertigten Bauteils lediglich zulassen, dieses nur in einem sehr schmalen Einsatzbereich zu verwenden. Zukünftige bzw. andere Materialien können diesen schmalen Einsatzbereich erweitern. Dies können beispielsweise elektrisch und/oder thermisch leitfähige Kunststoffe (z.B. durch metallische Füllstoffe) oder andere Arten von Kunststoffen oder Metalle sein, die beispielsweise ein verbessertes Elastizitätsmodul, ein besseres Biegemodul, eine höhere Biegefestigkeit, eine geringere Bruchdehnung, eine größer Zugfestigkeit und/oder eine höhere Einsatztemperatur haben.

Ein Gegenstand mit beweglichen Teilen ist in der Zeichnung dargestellt und es wird in der folgenden Beschreibung sein Verfahren zur Herstellung näher erläutert. Es zeigen
- Figur 1:: eine Draufsicht auf ein Getriebe,
- Figur 2:: eine perspektivische Ansicht im auseinandergezogenen Zustand des des Getriebes nach Fig. 1,
- Figur 3:: eine perspektivische Ansicht des Getriebes nach Fig. 1 und
- Figur 4:: eine Ansicht des Getriebes nach Fig. 1 von unten gesehen.

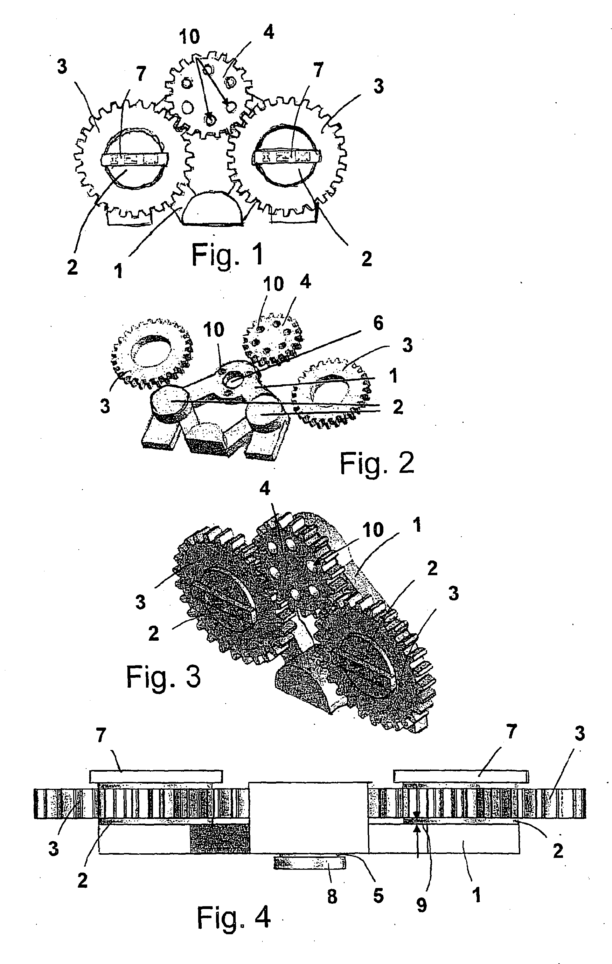

Das Getriebe, das mit dem erfindungsgemäßen Verfahren hergestellt werden soll und in den Fign. 1, 3 und 4 dargestellt ist, weist eine strebenartige Grundplatte 1 auf, an der mit ihr verbundene, feststehende Wellen 2 für Zahnräder 3 vorgesehen sind.

In Fig. 2 sind zum besseren Verständnis die Zahnräder 3 und Wellen 2 getrennt gezeichnet, obwohl sie im zusammengesetzten Zustand hergestellt werden. Weiterhin ist ein kleineres Antriebszahnrad 4 vorgesehen, das einen fest mit ihm verbundenen, eine Aussparung 6 in der Grundplatte 1 durchgreifenden Wellenstummel 5 aufweist, der mit einem nicht dargestellten Elektromotor verbindbar ist.

Zwischen den Zahnrädern 3, 4 und den Wellen 2 sowie zwischen Wellenstummel 5 und Aussparung 6 ist ein Abstand bzw. Spiel vorgesehen.

Die Zahnräder 3 werden durch Riegel 7 auf den Wellen 2 gehalten, während das Antriebszahnrad 4 durch einen Flansch 8 in der Aussparung festgelegt ist.

Mit 9 ist beispielhaft ein Abstand zwischen dem Zahnrad 3 und der Grundplatte 1 eingegeben, das bei der Herstellung einzuhalten ist, damit das dabei verwendete Stützenwachs abfließen kann. Ein solcher Abstand ist immer vorgesehen, wenn zwei bewegliche Teile sich gegenüberstehen, so der oben erwähnte Abstand zwischen Zahnräder 3 und Wellen bzw. Zahnrad 4 mit Wellenstummel 5 und Grundplatte 1 und Aussparung 6 bzw. Flansch 8 und Grundplatte 1. Zusätzlich sind sowohl in der Grundplatte 1 um die Aussparung 6 herum als auch im Antriebszahnrad 4 Löcher 10 als das Abfließen von Stützenwachs unterstützende Geometrien eingearbeitet.

Im Ausführungsbeispiel haben die Zahnräder 3 einen Durchmesser von ca. 3 cm und das Antriebszahnrad 4 einen solchen von ca. 1 cm. In einem solchen Fall ist der Abstand 9 und die entsprechenden oben erwähnten Abstände auf mindestens 0,1 bis 0,13 mm zu bemessen. Dieser Abstand vergrößert sich auf mindestens 0,3 mm, wenn die sich parallel gegenüberliegenden Flächen größer als 30 mm² sind, d.h. wenn Stützenwachs einer Fläche größer als 30 mm² abgeschmolzen werden muss. Die Löcher 10 müssen einen Durchmesser von mindestens 1 mm haben, um dem Stützenwachs das Abfließen zu ermöglichen.

Die Bestandteile des Getriebes wurden zunächst in einem Konstruktionsprogramm einzeln gezeichnet und anschließend in diesem zu einer Baugruppe zusammengesetzt. Beim Zusammensetzen im Konstruktionsprogramm wurde darauf geachtet, dass die erwähnten minimalen Abstände der Teile zueinander eingehalten werden, damit das Stützenwachs während des Abschmelzvorgangs im Wärmeofen richtig abfließen kann. Die CAD-Zeichnung ist ein digitales Ebenbild des wie in den Fign. 1 bis 4 dargestellten späteren Getriebes und ist als STL-Datei vorhanden.

Wie oben ausgeführt wurde, wird auf einer Bauplattform eine Grundstruktur aus Stützenmaterial, wie Stützenwachs, aufgetragen, worauf die verschiedenen Schichten mit einem Drucker, dem die STL-Datei zugeführt wird, in den unterschiedlichen Materialien, dem Bauteilmaterial und dem Stützenmaterial, z.B. Stützenwachs, aufgetragen werden. Die Bauplattform und der Drucker sind dabei relativ zueinander dreidimensional verschiebbar.

Zwischen den jeweiligen Bauteilbereichen jeder Schicht sind Lücken oder Abstände, wie vorher berechnet, vorgesehen, die mit dem Stützenmaterial ausgefüllt werden, wobei die unterschiedlichen Materialien geometrisch richtig bei dem Druckvorgang der Schicht aufgebracht werden. Nach dem fertigen Aufbau im 3D-Drucker, der das Getriebe mit dem dazwischen liegenden Stützenmaterial umfasst, wird dieser gegebenenfalls gehärtet und anschließend in einem Ofen abgeschmolzen. Nach dem Abschmelzen bleibt ein Getriebe mit beweglichen Zahnrädern zurück.

## Patentansprüche

1. Verfahren zur Herstellung eines Gegenstandes mit mindestens zwei relativ zueinander beweglichen Bauteilen, wobei von dem gesamten Gegenstand für ein Rapid-Prototyping-Verfahren Geometrie-Daten erstellt werden,
**dadurch gekennzeichnet,**
**dass** zwischen den beweglichen Bauteilen ein vorgegebener minimaler Abstand von größer als 0,1 mm berücksichtigt wird, dass entsprechend den vorgegebenen Geometriedaten schichtweise ein erstes Material als Stützenmaterial und ein zweites Material als Bauteilematerial aufgebracht wird, wobei das Stützenmaterial Lücken einschließlich derjenigen mit dem minimalen Abstand zwischen dem jeweiligen Bauteilematerial ausfüllt, und dass nach der Beendigung des schichtweisen Aufbaus das Stützenmaterial entfernt wird.

2. Verfahren nach Anspruch 1, **dadurch gekennzeichnet, dass** der minimale Abstand zwischen den Bauteilen so bestimmt wird, dass unter Berücksichtigung der Eigenschaften des Stützenmaterials dieses bei seiner Entfernung aus dem jeweiligen Bereich zwischen den Bauteilen abgeführt werden kann.

3. Verfahren nach Anspruch 1 oder Anspruch 2, **dadurch gekennzeichnet, dass** abhängig von den Eigenschaften des Stützenmaterials mindestens eine Moleküllage des Stützenmaterials als minimaler Abstand vorgesehen wird.

4. Verfahren nach einem der Ansprüche 1 bis 3, **dadurch gekennzeichnet, dass** das Stützenmaterial so gewählt wird, dass es aufgrund seiner in Bezug zum Baumaterial unterschiedlichen physikalischen und/oder chemischen Eigenschaften trennbar ist.

5. Verfahren nach einem der Ansprüche 1 bis 4, **dadurch gekennzeichnet, dass** das Stützenmaterial einen niedrigeren Schmelzpunkt als das Bauteilematerial aufweist und dass das Stützenmaterial durch Erhöhung der Temperatur über seinen Schmelzpunkt abgeführt wird.

6. Verfahren nach einem der Ansprüche 1 bis 5, **dadurch gekennzeichnet, dass** das Stützenmaterial Wachs ist, das einen Schmelzpunkt im Bereich von 60 bis 70°C aufweist.

7. Verfahren nach einem der Ansprüche 1 bis 6, **dadurch gekennzeichnet, dass** das Bauteilematerial und das Stützenmaterial durch Drucken, Dispensieren, durch Schablonendruck oder dergleichen aufgebracht wird.

8. Verfahren nach einem der Ansprüche 1 bis 7, **dadurch gekennzeichnet, dass** das Bauteile- und Stützenmaterial schichtweise auf eine Plattform mittels mindestens eines Applikationsgerätes, das abhängig von den Geometriedaten gesteuert wird, aufgetragen und anschließend gehärtet wird.

9. Verfahren nach einem der Ansprüche 1 bis 8, **dadurch gekennzeichnet, dass** an, in oder zwischen den Bauteilen zusätzliche geometrische Maßnahmen getroffen werden, die ein Lösen und/oder Abfließen des Stützenmaterials erleichtern.

10. Verfahren nach Anspruch 9, **dadurch gekennzeichnet, dass** die zusätzlichen geometrischen Maßnahmen Öffnungen, Kanülen oder Rillen sind.

11. Verfahren nach Anspruch 10, **dadurch gekennzeichnet, dass** die Öffnung so bemessen wird, dass sie einen Durchmesser von mindestens 1 mm aufweist.

12. Verfahren nach einem der Ansprüche 1 bis 11, **dadurch gekennzeichnet, dass** als eines der mindestens zwei beweglichen Bauteile eine einen Hohlraum einschließende Struktur, wie eine Kugel, und als anderes Bauteil ein in dem Hohlraum beweglich aufgenommenes Bauteil, wie eine weitere Kugel gewählt wird, wobei in der äußeren Struktur mindestens eine Öffnung für das Abfließen des Stützenmaterials vorgesehen ist.

13. Verfahren nach einem der Ansprüche 1 bis 12 zur Herstellung eines Getriebes mit mindestens zwei Zahnrädern.

## Claims

1. A method for manufacturing an object with at least two components which are movable relative to one another, wherein
geometry data is set up from the whole object for a rapid prototyping method, **characterized in that** a predefined minimal distance between the moving components of larger than 0,1 mm is taken into account, that a first material as a support material and a second material as a component material, are deposited in a layered manner according to the predefined geometry data, wherein the support material fills out gaps including those with the minimal distance between the respective component material, and that the support material is removed after the completion of the layered construction.

2. A method according to claim 1, **characterised in that** the minimal distance between the components is determined such that whilst taking account of the characteristics of the support material, this may be led away between the components, on its removal out of the respective region.

3. A method according to claim 1 or claim 2, **characterised in that** at least one molecular layer of the support material is provided as a minimal distance, depending in the characteristics of the support material.

4. A method according to one of the claims 1 to 3,
**characterised in that** the support material is selected such that it may be separated on account of its physical and/or chemical properties which are different with respect to the component material.

5. A method according to one of the claims 1 to 4, **characterised in that** the support material has a lower melting point than the component material, and that the support material is led away by way of increasing the temperature beyond its melting point.

6. A method according to one of the claims 1 to 5, **characterised in that** the support material is wax, which has a melting point in the range of 60 to 70.

7. A method according to one of the claims 1 to 6, **characterised in that** the component material and the support material are deposited by way of printing, dispensing, by way of screen printing or likewise.

8. A method according to one of the claims 1 to 7, **characterised in that** the component material and support material are deposited in a layered manner onto a platform by way of at least one application apparatus which is controlled depending on the geometry data, and are subsequently cured.

9. A method according to one of the claims 1 to 8, **characterised in that** additional geometric measures are made, on, in or between the components, which simplify a release and/or flowing-away of the support material.

10. A method according to claim 9, **characterised in that** the additional geometric measures are openings, channels or grooves.

11. A method according to claim 9, **characterised in that** the opening is dimensioned such that it has a diameter of at least 1 mm.

12. A method according to one of the claims 1 to 11, **characterized in that** a structure enclosing a cavity, such as a ball, is selected as one of the at least two movable components, and a component accommodated in the cavity in a movable manner, such as a further ball, is selected as the other component, wherein at least one opening is provided in the outer structure for the flowing-away of the support material.

13. A method according to one of the claims 1 to 12 for manufacturing a gear with at least two cogs.

## Revendications

1. Procédé de fabrication d'un objet avec au moins deux composants mobiles l'un par rapport à l'autre, des données géométriques de l'ensemble de l'objet étant établies pour un procédé de prototypage rapide,
**caractérisé en ce qu'**il est tenu compte d'une distance minimale prédéfinie supérieure à 0,1 mm entre les composants mobiles, **en ce que** conformément aux données géométriques prédéfinies, il est appliqué couche après couche un premier matériau servant de matériau de soutien et un second matériau servant de matériau du composant, le matériau de soutien remplissant des vides y compris ceux présentant la distance minimale entre le matériau de composant considéré, et **en ce qu'**à l'achèvement de la construction couche après couche, le matériau de soutien est éliminé.

2. Procédé selon la revendication 1, **caractérisé en ce que** la distance minimale entre les composants est déterminée de manière qu'en tenant compte des propriétés du matériau de soutien, celui-ci peut être évacué lors de son élimination de la zone comprise entre les composants.

3. Procédé selon l'une quelconque des revendications 1 ou 2, **caractérisé en ce qu'**en fonction des propriétés du matériau de soutien, il est prévu au moins une couche moléculaire du matériau de soutien en tant que distance minimale.

4. Procédé selon l'une quelconque des revendications 1 à 3, **caractérisé en ce que** le matériau de soutien est choisi de manière qu'il soit séparable sur la base de ses propriétés physiques et/ou chimiques différentes de celles du matériau de construction.

5. Procédé selon l'une quelconque des revendications 1 à 4, **caractérisé en ce que** le matériau de soutien présente un point de fusion plus bas que le matériau du composant et **en ce que** le matériau de soutien est éliminé par augmentation de la température au-delà de son point de fusion.

6. Procédé selon l'une quelconque des revendications 1 à 5, **caractérisé en ce que** le matériau de soutien est de la cire qui présente un point de fusion de l'ordre de 60 à 70°C.

7. Procédé selon l'une quelconque des revendications 1 à 6, **caractérisé en ce que** le matériau du composant et le matériau de soutien sont appliqués par impression, dispersion, par sérigraphie ou similaire.

8. Procédé selon l'une quelconque des revendications 1 à 7, **caractérisé en ce que** le matériau du composant et le matériau de soutien sont appliqués couche après couche sur une plateforme au moyen d'au moins un appareil applicateur qui est commandé en fonction des données géométriques, puis sont ensuite durcis.

9. Procédé selon l'une quelconque des revendications 1 à 8, **caractérisé en ce que** sur, dans ou entre les composants sont adoptés des moyens géométriques supplémentaires qui facilitent un détachement et ou écoulement du matériau de soutien.

10. Procédé selon la revendication 9, **caractérisé en ce que** les moyens géométriques supplémentaires sont des orifices, des canules ou des rigoles.

11. Procédé selon la revendication 10, **caractérisé en ce que** l'orifice a des dimensions telles qu'il présente un diamètre d'au moins 1 mm.

12. Procédé selon l'une quelconque des revendications 1 à 11, **caractérisé en ce qu'**il est choisi comme l'un des au moins deux composants mobiles, une structure enfermant une cavité, telle qu'une sphère, et comme autre composant un composant reçu de manière mobile dans la cavité, tel qu'une autre sphère, dans la structure extérieure étant prévu au moins un orifice pour l'écoulement du matériau de soutien.

13. Procédé selon l'une quelconque des revendications 1 à 12 pour la fabrication d'un engrenage avec au moins deux roues dentées.
